(19) Europäisches Patentamt
European Patent Office
Office européen des brevets

(11) EP 2 444 629 A1

(12) EUROPEAN PATENT APPLICATION
published in accordance with Art. 153(4) EPC

(43) Date of publication:
25.04.2012 Bulletin 2012/17

(51) Int Cl.:
F02B 39/16 (2006.01)  F02D 41/04 (2006.01)

(21) Application number: 10845765.6

(22) Date of filing: 11.06.2010

(86) International application number:
PCT/JP2010/059941

(87) International publication number:
WO 2011/099173 (18.08.2011 Gazette 2011/33)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 09.02.2010 JP 2010026438

(71) Applicant: Mitsubishi Heavy Industries, Ltd.
Tokyo 108-8215 (JP)

(72) Inventors:
• IDE, Kazunari
  Tokyo 108-8215 (JP)
• YAMADA, Tomohide
  Tokyo 108-8215 (JP)

(74) Representative: Bongiovanni, Simone et al
Studio Torta S.p.A.
Via Viotti, 9
10121 Torino (IT)

(54) CONTROL DEVICE FOR ENGINE WITH TURBOCHARGER

(57) An object of the present invention is to provide a control device for a turbocharged engine capable of accurately estimating the revolution speed of a turbine without using additional components for directly detecting the turbine revolution speed, and by accurately estimating the turbine revolution speed, capable of accurately keeping the turbine revolution speed at an allowed value or below and preventing excessive rotation. The control device for a turbocharged engine includes a turbocharger having a compressor disposed in an intake passage of an engine, and a turbine disposed in an exhaust passage of the engine, a fuel injection amount control unit for controlling a fuel injection amount to the engine according to an operating state of the engine, and a turbine revolution speed estimation unit for determining by calculations an estimated value of a revolution speed of the turbine from the operating state of the engine. When the estimated value of the turbine revolution speed exceeds a predetermined allowed value, the fuel injection control unit controls the fuel injection amount such that the estimated value of the turbine revolution speed becomes equal to or less than the allowed value.

FIG. 2

EP 2 444 629 A1

**Description**

**TECHNICAL FIELD**

The present invention relates to a control device for a turbocharged engine, and more particularly to a control device for a turbocharged engine capable of accurately keeping the turbine revolution speed at an allowed value or below.

**BACKGROUND ART**

A large number of vehicles and construction machines have been using turbocharged engines.

When a turbocharged engine is used at a high altitude where the air pressure is low and air density is low, where the amount of air supplied to the engine is to be same as that when the engine is used at a low altitude, it is necessary to supply the larger amount of air than at a low altitude, if this amount is represented by the volume of air supplied to the engine. Therefore, when the turbocharged engine is used at a high altitude where the air density is low, the revolution speed of the turbine constituting the turbocharger can rise excessively to supply such a large amount of air to the engine and such increase in revolution speed can damage the turbocharger.

Accordingly, for example, Patent Document 1 and Patent Document 2 disclose techniques that make it possible to prevent excessive rotation of the turbine and damage of the turbocharger even when a turbocharged engine is used at a high altitude where the air density is low.

With the technique disclosed in Patent Document 1, a revolution speed sensor is mounted on a turbocharger equipped with movable nozzle vanes on the turbine and the nozzle vane opening degree is controlled such that the actual mass flow rate measured by the air flowmeter provided upstream of the compressor of the turbocharger matches at all times the target mass flow rate outputted correspondingly to the operating state of the engine. Further, when the detected value of the revolution speed of the turbocharger is equal to or higher than the ideal revolution speed, the fuel injection amount is controlled such that the actual intake volume flow rate of the compressor matches the volume flow rate map. The intake volume flow rate referred to herein is a value calculated on the basis of the intake mass flow rate obtained with the air flowmeter and the intake temperature.

With the technique disclosed in Patent Document 2, the altitude is determined on the basis of information relating to the atmospheric pressure measured with an atmospheric pressure sensor, and an EGR control valve is opened on the basis of the determined altitude to keep the turbine revolution speed at an allowed value or below. In the construction machines such as hydraulic shovels, the rated operation is performed, a hydraulic pump is continuously driven, while maintaining a comparatively high revolution speed, and the construction operation is performed by the hydraulic pressure obtained with the hydraulic pump. Therefore, the supercharging pressure during the operation is comparatively high and the problem associated with black fume generation is unlikely to be encountered even when the exhaust gas is recirculated at a high altitude where the air density is low. Accordingly, the technique disclosed in Patent Document 2 can be said to be suitable to keep the turbine revolution speed at the allowed value or below by opening the EGR control valve.

Patent Document 1: Japanese Patent Application Laid-open No. 2005-299618
Patent Document 2: Japanese Patent Application Laid-open No. 2008-184922

However, with the technique disclosed in Patent Document 1, it is necessary to provide a revolution speed sensor. Since it is usually not necessary to control the revolution speed of the turbocharger, when the technique disclosed in Patent Document 1 is used, the revolution speed sensor is provided only for detecting the excessive revolution of the turbine which results in undesirable increase of the product cost. Further, the volume flow rate is calculated from the information on the mass flow rate and intake temperature, but the information on atmospheric pressure is not used in such calculation. Since the volume flow rate changes depending on atmospheric pressure, the calculation of volume flow rate cannot be said to be performed accurately. Therefore, the control cannot be said to be performed accurately.

In the technique disclosed in Patent Document 2, the turbine revolution speed is decreased by opening the EGR control valve, but in a high-load operation, the air excess ratio is inherently low and therefore smoke easily appears and the valve opening operation performed under a low atmospheric pressure at which the turbine revolution speed increases leads to generation of a large amount of smoke.

Further, in applications other than those to construction machines, namely such that the operation state changes from a low-load state to a high-load state, where the EGR is introduced to protect against excessive rotation of the turbocharger, this is highly probable to cause the problem associated with black smoke generation. Therefore, applications other than those to construction machines are difficult and the application range is narrow.

Furthermore, the turbine revolution speed is controlled to the allowed value only on the basis of altitude information determined from the air pressure information, but the turbine revolution speed depends on both the air pressure and the intake temperature. When the intake temperature is not taken into account, as in the technique disclosed in Patent Document 2, the parameters should be set such that no excessive rotation occurs even under conditions with a high intake temperature at which the excessive rotation of the turbine easily occurs, and when the intake temperature is low, the fuel injection amount is unnecessarily restricted and the engine output is also unnecessarily restricted.

**DISCLOSER OF THE INVENTION**

It is an object of the present invention to resolve the above-described problems by providing a control device for a turbocharged engine which is capable of accurately estimating the revolution speed of a turbine, without using additional components for directly detecting the turbine revolution speed, and of accurately keeping the turbine revolution speed at the allowed value or below and preventing excessive rotation by accurately estimating the turbine revolution speed.

In order to resolve the aforementioned problems the present invention provides a control device for a turbocharged engine, including: a turbocharger having a compressor disposed in an intake passage of an engine, and a turbine disposed in an exhaust passage of the engine; and a fuel injection amount control unit for controlling a fuel injection amount to the engine according to an operating state of the engine, the control device further including a turbine revolution speed estimation unit for determining by calculations an estimated value of a revolution speed of the turbine from the operating state of the engine, wherein when the estimated value of the turbine revolution speed exceeds a predetermined allowed value, the fuel injection control unit controls the fuel injection amount such that the estimated value of the turbine revolution speed becomes equal to or less than the allowed value.

Therefore, the turbine revolution speed can be estimated from the operating state of the engine, without adding components that directly detect the turbine revolution speed. As a consequence, the occurrence of problems associated with the increase in the product cost resulting from the installation of a sensor for detecting the turbine revolution speed and the decrease in product reliability caused by failures and erroneous detection of the sensor can be avoided. Further, by restricting the fuel injection amount when the turbine revolution speed exceeds the allowed value, it is possible to restrict the engine output, thereby keeping the turbine revolution speed at the predetermined value or below and the excessive rotation of the turbine can be prevented. As a result, the turbocharger can be prevented from failures caused by excessive rotation of the turbine.

Further, the control device for a turbocharged engine may include an atmospheric pressure measurement unit for measuring an atmospheric pressure; an intake mass flow rate measurement unit for measuring an intake mass flow rate of intake air sucked into the compressor disposed in the intake passage; an intake temperature measurement unit for measuring a temperature of the intake air introduced into the compressor disposed in the intake passage; and a boost pressure measurement unit for measuring a boost pressure of the engine, wherein the turbine revolution speed estimation unit may determine an intake volume flow rate in a standard state of intake air sucked into the compressor disposed in the intake passage by using the atmospheric pressure, the intake mass flow rate, and the intake temperature, determine a charging pressure ratio by dividing the boost pressure by the atmospheric pressure, and estimate a turbine revolution speed by using a turbocharger performance curve representing a relationship between the intake volume flow rate in the standard state, an intake pressure ratio, and the turbine revolution speed.

The turbine revolution speed is affected not only by the atmospheric pressure, but also by the intake temperature. Accordingly, when the turbine revolution speed is estimated by using the turbocharger performance curve from the intake volume flow rate and charging pressure ratio, the turbine revolution speed can be accurately estimated by using the intake volume flow rate in the standard state that has been determined by taking into account the atmospheric pressure and the intake temperature as the intake volume flow rate. The standard state referred to herein is 25°C and 1 atm.

Further, the control device for a turbocharged engine may include an atmospheric pressure measurement unit for measuring an atmospheric pressure; and an intake temperature measurement unit for measuring a temperature of the intake air introduced into the compressor disposed in the intake passage, wherein the turbine revolution speed estimation unit may calculate an air density of the intake air by using the atmospheric pressure and the intake temperature, and estimate a turbine revolution speed from the air density of the intake air by using a map representing a relationship between the intake density and the turbine revolution speed that has been created in advance on the basis of an experiment.

As a result, the turbocharger performance curve is unnecessary and the turbine revolution speed can be estimated by simple computational processing.

Further, the intake temperature measurement unit can use an air supply manifold temperature measurement unit for measuring an air supply manifold temperature inside an air supply manifold of the engine, and a map representing a relationship between the air supply manifold temperature and the intake temperature that has been created in advance on the basis of an experiment to determine an intake temperature from the air supply manifold temperature.

As a result, it is not necessary to use a sensor that directly detects the temperature of the intake air introduced into the compressor disposed in the intake passage. Therefore, the present invention can be applied, without providing such new sensor, also to a turbocharged engine that has no sensor capable of directly detecting the intake temperature.

The fuel injection amount control unit may set in advance a maximum fuel injection amount at which the turbine revolution speed becomes equal to or less than the allowed value, according to the turbine revolution speed and atmospheric pressure, and may decrease the fuel injection amount to a value equal to or less than the maximum fuel injection amount corresponding to the atmospheric pressure and turbine revolution speed and may make the turbine revolution speed equal to or less than the allowed value, when the turbine revolution speed exceeds the allowed value.

As a result, the maximum value of the fuel injection amount can be easily determined.

The control device may also include an air density calculation unit for calculating an air density of the intake air by using the atmospheric pressure and intake temperature, wherein the fuel injection amount control unit may set in advance a maximum fuel injection amount at which the turbine revolution speed becomes equal to or less than the allowed value, according to the turbine revolution speed and air density, and may decrease the fuel injection amount to a value equal to or less than the maximum fuel injection amount corresponding to the air density and turbine revolution speed and makes the turbine revolution speed equal to or less than the allowed value, when the turbine revolution speed exceeds the allowed value.

As a result, when the upper limit of the fuel injection amount is determined, not only the engine revolution speed and atmospheric pressure, but also the intake temperature is taken into account. Therefore, when the excessive rotation of the turbine is prevented, a low reduction of the fuel injection amount and a low reduction of engine output can be ensured.

The fuel injection amount control unit may calculate a degradation ratio of fuel consumption rate corresponding to the intake temperature, and may perform correction so as to increase the maximum fuel injection amount as the degradation ratio becomes larger.

As a result, by taking into account the variation in fuel consumption rate, it is possible to ensure an even lower reduction of engine output when the excessive rotation of the turbine is prevented.

The present invention can provide a control device for a turbocharged engine which is capable of accurately estimating the revolution speed of a turbine, without using additional components for directly detecting the turbine revolution speed, and of accurately keeping the turbine revolution speed at the allowed value or below and preventing excessive rotation by accurately estimating the turbine revolution speed.

## BRIEF DESCRIPTION OF THE DRAWINGS

FIG. 1 is a schematic diagram illustrating engine surroundings where the control device for a turbocharged engine according to Embodiment 1 is used.

FIG. 2 illustrates the control logic of flow injection amount in Embodiment 1.

FIG. 3 is a flowchart of control relating to the restriction of flow injection amount in Embodiment 1.

FIG. 4 is a flowchart illustrating the procedure of maximum injection amount restriction determination in Embodiment 1.

FIG. 5 is a flowchart illustrating another example of the procedure of maximum injection amount restriction determination in Embodiment 1.

FIG. 6 illustrates the control logic of flow injection amount in Embodiment 2.

FIG. 7 is a graph illustrating the relationship between the turbine revolution speed and air density.

FIG. 8 illustrates the control logic of flow injection amount in Embodiment 3.

FIG. 9 is a graph illustrating the relationship between the air supply manifold temperature and intake temperature.

FIG. 10 illustrates the control logic of flow injection amount in Embodiment 5.

FIG. 11 is a graph illustrating the relationship between the air density at a constant engine revolution speed and the maximum fuel injection amount at which the turbine revolution speed becomes equal to or less than the allowed value.

FIG. 12 illustrates the control logic of flow injection amount in Embodiment 6.

FIG. 13 is a graph illustrating the relationship between the turbine revolution speed and air density with respect to the experimental points shown in the graph in FIG. 11.

## BEST MODE FOR CARRYING OUT THE INVENTION

The preferred embodiments of the present invention will be described below in detail with reference to the appended drawings. The dimensions, materials, shapes, and mutual arrangements of constituent components described in the embodiments are not intended to restrict the scope of the invention, unless specifically indicated in the description, and merely serve as illustrative examples.

Embodiment 1

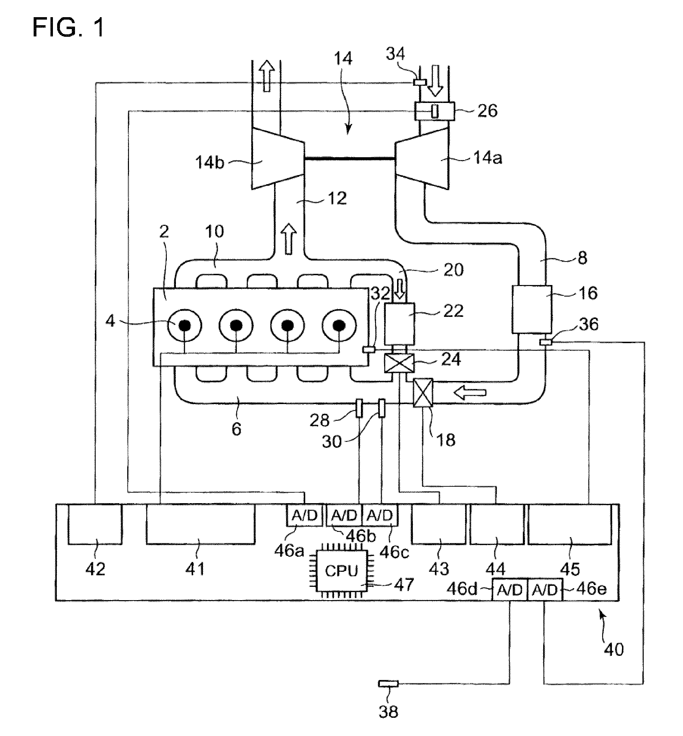

FIG. 1 is a schematic diagram illustrating engine surroundings where the control device for a turbocharged engine according to Embodiment 1 is used. In FIG. 1, an engine 2 is a four-cycle diesel engine having four cylinders.

In the engine 2, intake passages 8 merge via an air supply manifold 6, and an exhaust passage 12 is connected to the engine by an exhaust manifold 10.

A compressor 14a of a turbocharger 14 is provided in the intake passage 8. The compressor 14a is driven coaxially with the below-described turbine 14b. An intercooler 16 performing heat exchange between the atmosphere and the supplied air flowing through the intake passage 8 is provided downstream of the compressor 14a in the intake passage 8. A throttle valve 18 that adjusts the flow rate of supplied air flowing through inside the intake passage 8 is provided downstream of the intercooler 16 in the intake passage 8.

An air flowmeter 26 that detects an intake flow rate and a temperature sensor 34 that detects an intake temperature are provided upstream of the compressor 14a in the intake passage 8, and a pressure sensor 36 that detects a boost pressure is provided upstream of the throttle valve 18 and downstream of the intercooler 16. A temperature sensor 28 and a pressure sensor 30 are provided in the air supply manifold 6.

The detected values of the air flowmeter 26, temperature sensor 28, pressure sensor 30, and pressure sensor 36 are inputted to an engine control unit (ECU) 40 via the A/D converters 46a, 46b, 46c, and 46e, respectively. The detected value of the temperature sensor 34 is inputted to the ECU 40 via a thermistor circuit 42.

A turbine 14b of the turbocharger 14 is provided in the exhaust passage 12. The turbine 14b is driven by the exhaust gas from the engine 2. An EGR passage 20 used to recirculate part of the exhaust gas to the intake passage 8 is connected to the exhaust manifold 10. An EGR cooler 22 and an EGR control valve 24 are provided in the EGR passage 20.

The EGR cooler 22 is provided on the exhaust manifold 10 side of the EGR control valve 24, performs heat exchange between the EGR gas passing through the EGR cooler 22 and cooling water, and decreases the temperature of the EGR gas. The EGR control valve 24 controls the flow rate of the EGR gas flowing in the EGR passage 20.

An engine speed sensor 32 is provided in the engine 4. The detected value of the engine speed sensor 32 is inputted to the ECU 40 via the pulse count circuit 47.

A pressure sensor 38 capable of measuring the atmosphere pressure is also provided, and the atmospheric pressure detected by the pressure sensor 38 is inputted to the ECU 40 via the A/D converter 46d.

A unit capable of acquiring altitude information such as GPS may be provided instead of the pressure sensor 38, and the atmospheric pressure may be estimated by the ECU 40 from the altitude information.

In ECU 40, the target opening degrees of the EGR control valve 24 and the throttle valve 18 are calculated by a CPU 48 on the basis of the aforementioned inputted values, and the opening degrees of the EGR control valve 24 and throttle valve 18 are controlled via drive circuits 43, 44.

Further, a fuel injection amount for the engine 4 is also calculated by the CPU 48 on the basis of the aforementioned inputted values, and the fuel injection amount for the engine 4 is controlled via an injector drive circuit 41.

The aforementioned flow injection amount is restricted by the revolution speed of the turbine 14b as a matter relating to the specific control in accordance with the present invention.

The control relating to the restriction of the flow injection amount in accordance with the present invention will be explained below.

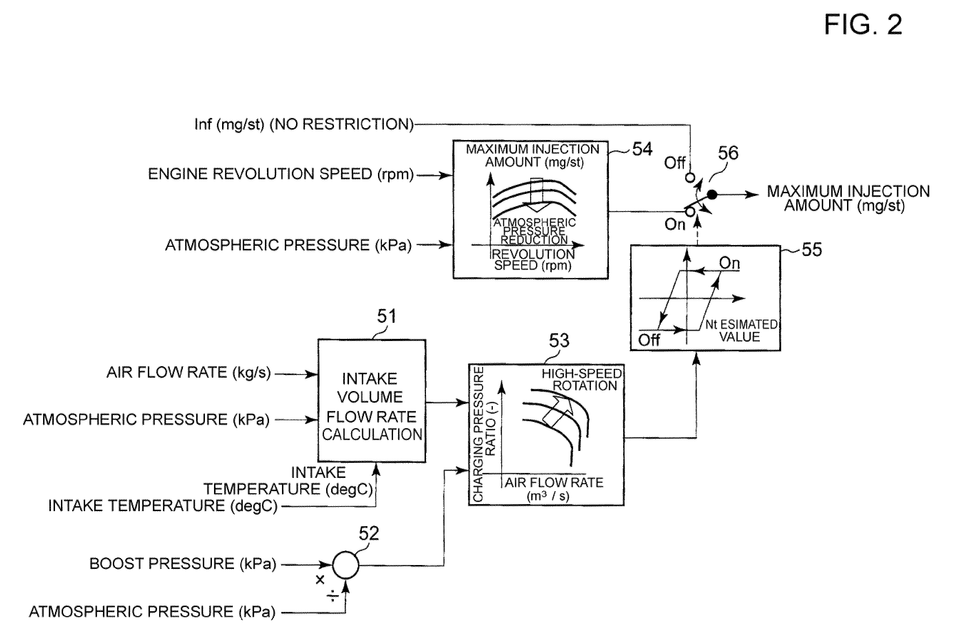

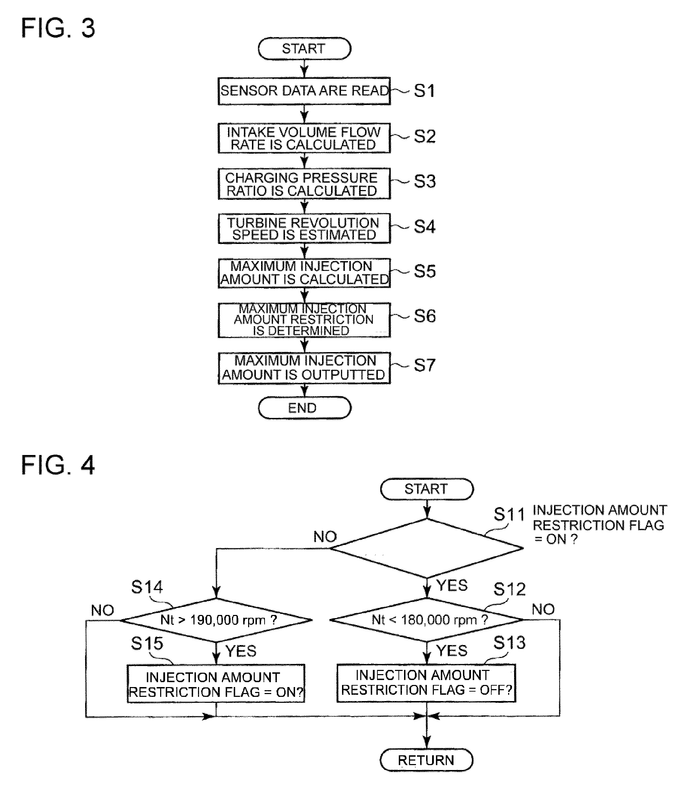

FIG. 2 illustrates the control logic of flow injection amount in Embodiment 1. FIG. 3 is a flowchart of control relating to the restriction of flow injection amount in Embodiment 1.

In the flowchart shown in FIG. 3, the processing is started, and where the ECU 40 operates at this time, the processing advances to step S1.

In step S1, data of various sensors are read into the ECU 40.

The sensor data read in step S1 include the atmospheric pressure (kPa) detected by the pressure sensor 38, the intake mass flow rate (kg/s) detected by the air flowmeter 26, the intake temperature (°C) detected by the temperature sensor 34, and the boost pressure (kPa) detected by the pressure sensor 36.

Once the reading of the data from the sensors is completed in step S1, the processing advances to step S2.

In step S2, the intake volume flow rate is calculated. This operation corresponds to the reference numeral 51 in FIG. 2. In step S2, as shown by the reference numeral 51 in FIG. 2, the intake volume flow rate ($m^3$/s) in a standard state (25°C, 1 atm) is calculated by using the intake mass flow rate (kg/s) detected by the air flowmeter 26, the atmospheric pressure (kPa) detected by the pressure sensor 38, and the intake temperature (°C) detected by the temperature sensor 34.

Once the calculation of the intake volume flow rate in the standard state in step S2 has been completed, the processing advances to step S3. In step S3, the charging pressure ratio is calculated. This operation corresponds to the reference symbol 52 in FIG. 2. In step S3, the charging pressure ratio (-) is calculated by dividing the boost pressure (kPa) detected by the pressure sensor 36 by the atmospheric pressure (kPa) detected by the pressure sensor 38, as shown by the reference numeral 52 in FIG. 2.

Once the calculation of the charging pressure ratio in step S3 has been completed, the processing advances to step S4. In step S4, the turbine revolution speed of the turbine 14b is estimated. The turbine revolution speed is estimated from the turbocharger performance curve such as shown in the box denoted by the reference numeral 53 in FIG. 2. The turbocharger performance curve represents the relationship between the air volume flow rate ($m^3$/s) in the standard state, charging pressure ratio (-), and turbine revolution speed and is specific to each turbocharger. In the box denoted by the reference numeral 53 in FIG. 2, examples of the relationship between the charging pressure ratio (-) and the air volume flow rate ($m^3$/s) in the standard state are represented by performance curves for each revolution speed. By using such performance curves, it is possible to calculate the turbine revolution speed from the charging pressure ratio (-) and the air volume flow rate ($m^3$/s) in the standard state.

In other words, the intake volume flow rate ($m^3$/s) in the standard state is calculated on the basis of information read from the sensors in step S2, the charging pressure ratio (-) is calculated on the basis of information read from the sensors in step S3, and the turbine revolution speed is estimated by using the performance curve in step S4, thereby making it possible to estimate the turbine revolution speed from the information read from the sensors.

Once the processing of step S4 has been completed, the processing flow advances to step S5.

In step S5, the maximum injection amount (mg/st) is calculated. The maximum injection amount as referred to herein means the upper limit value of the amount (mg/st) of fuel injected in the engine 4 by the injection drive circuit 41.

The maximum injection amount is determined by using the map such as shown by the reference numeral 54 in FIG. 2. The map represented by the reference numeral 54 in FIG. 2 represents the relationship between the maximum injection amount (mg/st), turbine revolution speed (rpm), and atmospheric pressure (kPa). By using such a map, it is possible to determine the maximum injection amount from the atmospheric pressure (kPa) detected by the pressure sensor 38 and the turbine revolution speed calculated in step S4.

The map that can be used to determine the maximum injection amount from the atmospheric pressure and turbine revolution speed, such as represented by the reference symbol 54 in FIG. 2, is created in advance such that the maximum injection amount such that the turbine revolution speed is equal to or less than the allowed value at which excessive rotation can be prevented is determined according to the turbine revolution speed for each atmospheric pressure.

The map 52 indicates that the maximum injection amount decreases with the decrease in atmospheric pressure, that is, increase in altitude.

Once the processing of step S5 has been completed, the processing flow advances to step 56.

In step S6, the maximum injection amount restriction determination is performed. The maximum injection amount restriction determination as referred to herein is an operation of determining whether or not the upper limit of the fuel amount injected in the engine 2 is restricted to the maximum injection amount determined in step S5. When the turbine revolution speed is equal to or higher than the predetermined value, excessive rotation of the turbine occurs and the turbocharger can be damaged. Therefore, in the case of high-speed rotation in which the turbine revolution speed determined in step S4 is equal to or higher than a predetermined allowed value, the upper limit of the fuel amount injected in the engine 2 is restricted to the maximum injection amount determined in step S5.

The maximum injection amount restriction determination is performed by providing a hysteresis such as in the box represented by the reference numeral 55 in FIG. 2, so as to prevent frequent ON/OFF switching of the determination when the turbine revolution speed is close to the predetermined allowed value. The reference numeral 55 in FIG. 2 represents the map relating to the maximum fuel amount restriction determination in which the determination ON/OFF is plotted against the ordinate and the turbine revolution speed is plotted against the abscissa. This map will be explained below in greeter detail with reference to FIG. 4.

An example of the maximum injection amount restriction determination in step S6 will be explained with reference to FIG. 4.

FIG. 4 is a flowchart illustrating the procedure of maximum injection amount restriction determination in Embodiment 1. Where the processing is started, it is determined in step S11 whether or not an injection amount restriction flag is presently ON. The injection amount restriction flag as referred to herein is a flag for determining whether or not the upper limit of the fuel amount injected in the engine 2 is restricted to the maximum injection amount determined in step S5. This flag is affected by the turbine revolution speed calculated in step S4.

Where a positive (YES) determination is made in step S11, that is, where the injection amount restriction flag is determined to be presently ON, the processing advances to step S12.

In step S12, it is determined whether or not Nt (turbine revolution speed) is less than 180,000 rpm. Where a positive (YES) determination is made in step S12, that is, where it is determined that Nt < 180,000 rpm, the injection amount restriction flag is changed to OFF in step S13 and the processing ends. Where a negative (NO) determination is made in step S12, that is, where it is determined that Nt ≥180,000 rpm, the processing ends without changing the ON state of the injection amount restriction flag.

Further, where a negative (NO) determination is made in step S11, that is, where the injection amount restriction flag is determined to be presently OFF, the processing advances to step S14.

In step S14, it is determined whether or not Nt (turbine revolution speed) is more than 190,000 rpm. Where a positive (YES) determination is made in step S14, that is, where it is determined that Nt > 190,000 rpm, the injection amount restriction flag is changed to ON and the processing ends. Where a negative (NO) determination is made in step S14, that is, where it is determined that Nt ≤ 190,000 rpm, the processing ends without changing the OFF state of the injection amount restriction flag.

Thus, in accordance with the maximum injection amount restriction determination shown in FIG. 4, regardless of the present state of the injection amount restriction flag, the processing ends with the injection amount restriction flag being ON when Nt > 190,000 rpm and the injection amount restriction flag being OFF when Nt < 180,000 rpm, and within the range 180,000 rpm ≤ Nt ≤ 190,000 rpm, the processing ends while the present state of the injection amount restriction flag is maintained.

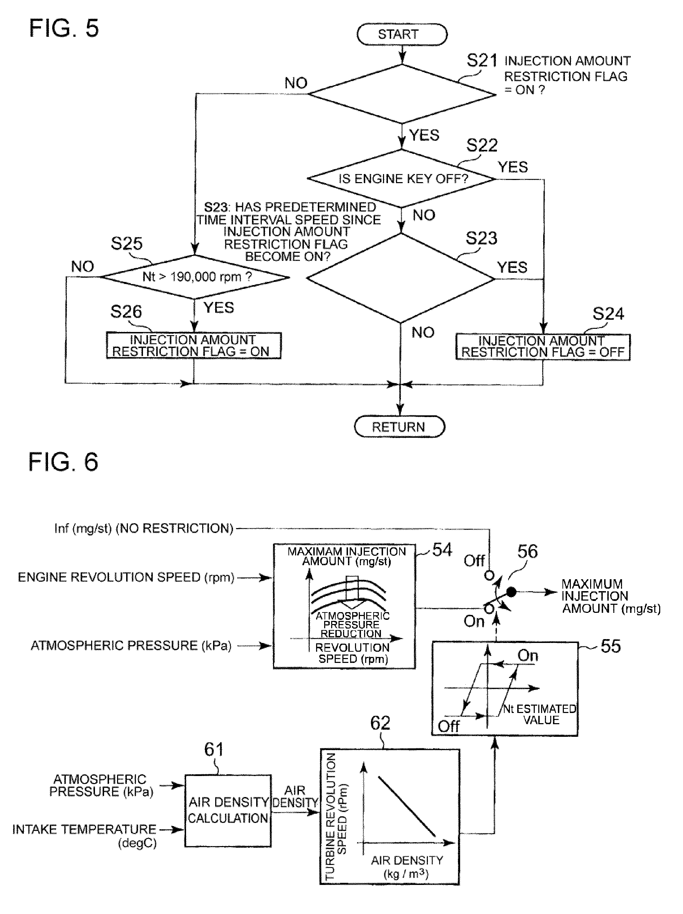

FIG. 5 shows a flow chart corresponding to another example illustrating the procedure of maximum injection amount restriction determination in Embodiment 1.
Where the processing is started, it is determined in step S21 whether or not the injection amount restriction flag is presently ON.

Where a positive (YES) determination is made in step S21, that is, where the injection amount restriction flag is determined to be presently ON, the processing advances to step S22.
In step S22, it is determined whether or not the engine key is OFF. Where a positive (YES) determination is made in step S22, that is, where the engine key is determined to be OFF, the injection amount restriction flag is changed to OFF in step S24 and the processing ends. Where a negative (NO) determination is made in step S22, that is, where the engine key is determined to be ON, the processing advances to step S23.
In step S23, it is determined whether or not a predetermined time interval, for example 1 h, has elapsed since the injection amount restriction flag has become ON. Where a positive (YES) determination is made in step S23, that is, where the predetermined time interval is determined to have elapses since the injection amount restriction flag has become ON, the injection amount restriction flag is changed to OFF in step S24 and the processing ends. Where a negative (NO) determination is made in step S23, the processing ends without changing the ON state of the injection amount restriction flag.
In other words, in steps S22 and S23, the injection amount restriction flag is changed to OFF when either of the following conditions is satisfied: the engine key has been tuned OFF and the predetermined time interval, for example 1 h, has elapsed since the injection amount restriction flag has become ON.

Further, where a negative (NO) determination is made in step S21, that is, where the injection amount restriction flag is determined to be presently OFF, the processing advances to step S25.
In step S25, it is determined whether or not Nt (turbine revolution speed) is more than 190,000 rpm. Where a positive (YES) determination is made in step S25, that is, where it is determined that Nt > 190,000 rpm, the injection amount restriction flag is changed to ON and the processing ends. Where a negative (NO) determination is made in step S14, that is, where it is determined that Nt ≤ 190,000 rpm, the processing ends without changing the OFF state of the injection amount restriction flag.

In the flowchart shown in FIG. 4 and the flowchart shown in FIG. 5, the conditions for setting the injection restriction flag OFF are different and can be selected according to the application of the engine.
When the injection restriction flag conditions shown in FIG. 4 are employed in applications with a frequent use in high-speed and high-load ranges, for example, applied to a power shovel, the injection amount restriction flag is repeatedly switched ON and OFF. In this case, the injection amount restriction function is frequently activated and deactivated. Therefore, the operator can feel uncomfortable. To avoid this problem, the procedure shown in FIG. 5 is used in the applications in which a high-speed and high-load region is used frequently. In the procedure shown in FIG. 5, the injection amount restriction flag is reset when the engine key is turned OFF in order to prevent the aforementioned frequent activation and deactivation of the injection amount restriction function. Further, the decrease in air temperature and increase in air density with time and the increase in air density occurring when the vehicle carrying the engine moves down from a mountain can be also taken in the account. In such cases, it is undesirable that the injection amount be restricted before the engine key is turned OFF. Therefore, the determination condition relating to the elapsed time interval is added to the engine key OFF condition in the procedure shown in FIG. 5.

Where step S6 in the flowchart shown in FIG. 3 ends, the processing advances to step S7 in the flowchart shown in FIG. 2. In step S7, when the aforementioned injection amount restriction flag is determined to be present by performing the maximum injection amount restriction determination according to the flowchart shown in FIG. 4 (box 55 shown in FIG. 2), the circuit 56 shown in FIG. 2 is switched ON and the maximum injection amount (mg/st) determined in step S5 (map 54 in FIG. 2) is outputted. When the injection amount restriction flag is OFF, the fuel injection amount is not particularly restricted.

Where step S7 ends, the processing ends.
In step S7, where the injection amount restriction flag is ON and the maximum injection amount is outputted, when the ECU 40 calculates the amount of fuel injected in the engine 4 with the CPU 48 on the basis of the aforementioned inputted values and controls the amount of fuel injected in the engine 4 with the injector drive circuit 41, the control is performed such that the fuel injection amount does not exceed the aforementioned maximum injection amount.

According to Embodiment 1, by restricting the maximum injection amount, it is possible to restrict the engine output, thereby making it possible to decrease the turbine revolution speed to a value equal to or lower than the predetermined value and prevent excessive rotation of the turbine. Therefore, the turbocharger can be prevented from damage caused by excessive rotation of the turbine.

Further, the turbine revolution speed can be estimated from the detected values of atmospheric pressure (kPa), intake mass flow rate (kg/s), intake temperature (°C), and boost pressure (kPa). Therefore, it is not necessary to provide a sensor for detecting the turbine revolution speed, and the occurrence of problems associated with the increase in product cost resulting from the installation of the sensor for detecting the turbine revolution speed and the decrease in product reliability caused by failures and erroneous detection of the sensor can be avoided.

Furthermore, in the present embodiment, the turbine revolution speed is estimated by taking into account not only the height information obtained from the atmospheric pressure or GPS, but also the intake temperature. Therefore, the turbine revolution speed can be estimated with good accuracy. As a result, the turbine revolution speed can be reduced with good accuracy to a value equal to or less than the allowed value.

When the turbocharger performance curve such as shown in the box 53 in FIG. 2 is used, the volume flow rate corresponding to the standard state is used. Therefore, the turbine revolution speed can be estimated with good accuracy from the turbocharger performance curve.

Furthermore, since the EGR control valve is not controlled to prevent the excessive rotation of the turbine, the technique of the present Embodiment can be also directly applied to the engine equipped with the EGR device.

Embodiment 2

A schematic diagram illustrating the engine surrounding where the control device for a turbocharged engine of Embodiment 1 is used is similar to that shown in FIG. 1, which is explained in Embodiment 1. Therefore, FIG. 1 will be used and the explanation thereof will be omitted.

FIG. 6 is a drawing illustrating the control logic of fuel injection amount in Embodiment 2.

The reference numerals in FIG. 6 that are identical to those in FIG. 2 denote same operations and control and the explanation thereof is herein omitted.

In Embodiment 2, a method for estimating the turbine revolution speed is different from that of Embodiment 1.

The method for estimating the turbine revolution speed in Embodiment 2 will be explained below with reference to FIG. 6.

In the box represented by the reference numeral 61 in FIG. 6, the ECU 40 inputs the atmospheric pressure (kPa) detected by the pressure sensor 38 and the intake temperature (°C) detected by the temperature sensor 34 and calculates the air density $(kg/m^3)$ from the atmospheric pressure (kPa) and the intake temperature (°C) .

Then, in the box represented by the reference numeral 62 shown in FIG. 6, the turbine revolution speed (rpm) is estimated from the map representing the relationship between the turbine revolution speed (rpm) and the air density $(kg/m^3)$.

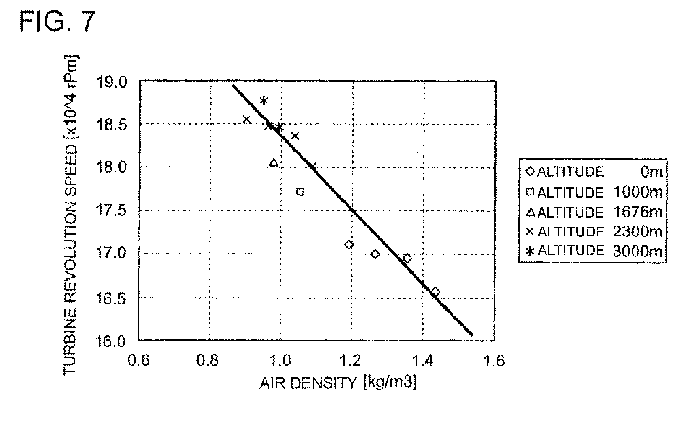

FIG. 7 shows an example of a graph representing the relationship between the turbine revolution speed (rpm) and the air density $(kg/m^3)$. In FIG. 7, the turbine revolution speed $(x10^4$ rpm) is plotted against the ordinate, and the air density $(kg/m^3)$ is plotted against the abscissa; each plot is obtained from experimental points. FIG. 7 indicates that there is a negative primary correlation between the turbine revolution speed and the air density, and where such turbine revolution speed and air density are plotted in advance, the turbine revolution speed can be easily determined from the air density.

The operations performed after the turbine revolution speed has been calculated are similar to those of Embodiment 1, and the explanation thereof is herein omitted.

According to Embodiment 2, the turbocharger performance curve is not required, and the estimated value of the turbine revolution speed can be determined by simple computational processing.

Embodiment 3

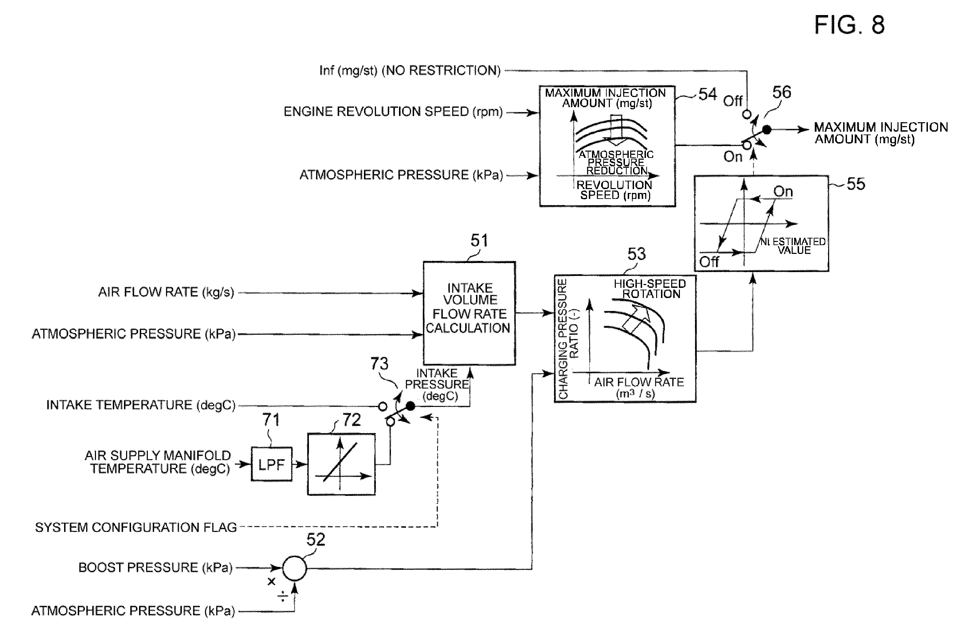

FIG. 8 is a drawing illustrating the control logic of fuel injection amount in Embodiment 3.

The reference numerals in FIG. 8 that are identical to those in FIG. 2 denote same operations and control and the explanation thereof is herein omitted.

In Embodiment 3, the intake temperature (°C) estimated from the air supply manifold temperature (°C) can be used instead of the intake temperature (°C) used when intake volume flow rate calculation 51 in Embodiment 1 is performed.

In FIG. 8, the ECU 40 passes the air supply manifold temperature (°C) detected by the temperature sensor 28 through a low-pass filter 71 and finds the intake temperature (°C) from the air supply manifold temperature (°C) by using the map in the box 72. The low-pass filter 71 is used with the object of suppressing the effect of the operation pattern during transient operation on variations in the air supply manifold temperature.

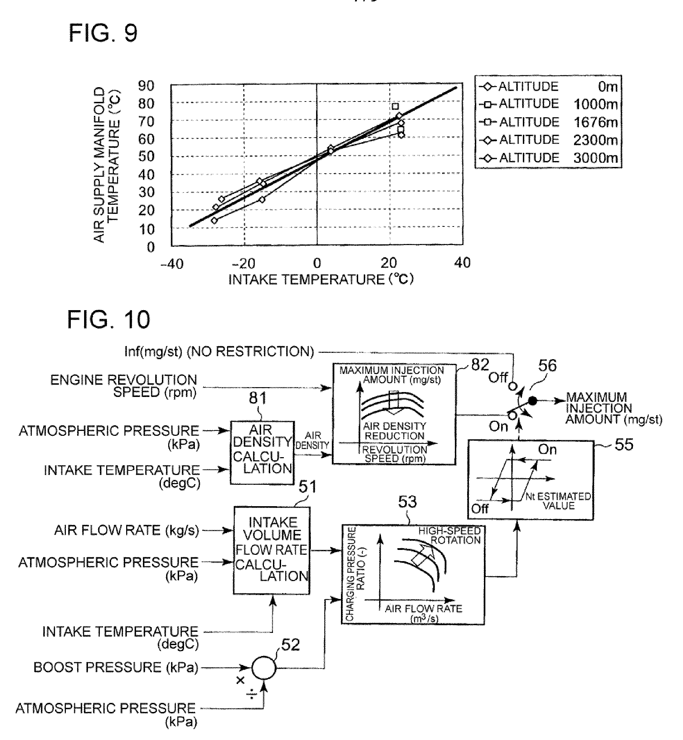

FIG. 9 is a graph illustrating the relationship between the air supply manifold temperature (°C) and intake temperature (°C). The air supply manifold temperature (°C) is plotted against the ordinate and the intake temperature (°C) is plotted against the abscissa; each plot is obtained from experimental points. As shown in FIG. 9, regardless of the altitude, that is, regardless of the atmospheric pressure, there is a primary correlation between the air supply manifold temperature (°C) and intake temperature (°C) .
Therefore, where the map such as shown in FIG. 9 is created in advance by experiments, the intake temperature (°C) can be determined in an easy manner from the air supply manifold temperature (°C).

Further, when intake volume flow rate calculation 51 is performed, it is possible to select (by the operation denoted by the reference numeral 73) whether to use the intake temperature (°C) directly detected by the temperature sensor 34 or the intake temperature (°C) determined by using the map (see the box 72) from the air supply manifold temperature (°C).

According to Embodiment 3, the excessive rotation of turbine can be prevented even in a turbocharged engine system which is not provided with a temperature sensor (34 in FIG. 1) that detects the intake temperature.
Further, the excessive rotation of turbine can be also prevented when the temperature sensor (34 in FIG. 1) that detects the intake temperature is present, but this temperature sensor has failed.

Since the air supply manifold temperature (°C) is affected by the EGR (exhaust gas recirculation), the method using the intake temperature (°C) from the air supply manifold temperature (°C) can be used when the EGR is not performed (that is, the opening degree of the EGR control valve 24 is zero or the EGR passage 20 itself is not present).

The intake temperature (°C) determined from the air supply manifold temperature (°C) can be also used as the intake temperature (°C) necessary when the air density calculations are performed in Embodiment 2.

Embodiment 4

An intake mass flow rate (kg/s) determined by calculations can be used instead of the air mass flow rate (kg/s) detected by the air flowmeter 26 in Embodiments 1 to 3.

When the EGR (exhaust gas recirculation) is not performed, the intake mass flow rate (kg/s) ($G_a$) can be determined by the following equation.

Equation (1)

$$G_a = \rho_m \cdot V_D \cdot \frac{N_e}{60} \cdot \frac{2}{I_{cycle}} \cdot n_{cyl} \cdot \eta_{V,m}\left(N_e, P_m\right) \qquad \cdots (1)$$

$$\rho_m = \frac{P_m}{R \cdot T_m}$$

In Equation (1), $\rho_m$ is an air density (kg/m$^3$) inside the air supply manifold, $V_D$ is an amount of exhaust gas (m$^3$), $N_e$ is an engine revolution speed (rpm), R is a gas constant (= 287.05 J/ (kg.K), $I_{cycle}$ is the number of cycles, $n_{cyl}$ is the number of cylinders, $\rho v,m$ ($N_e$, $P_m$) is a volume efficiency, $P_m$ is an air supply manifold pressure (Pa), and Tm is an air supply manifold temperature (K).

When the EGR (exhaust gas recirculation) is performed, the intake mass flow rate (kg/s) ($G_a$) can be determined by the following Equation (2) by providing a sensor for determining an EGR gas flow rate in the EGR cooler, measuring the EGR gas flow rate $G_{egr}$, and calculating the gas flow rate $G_{cyl}$ flowing into a cylinder by the aforementioned Equation (1).

$$G_a = G_{cyl} - G_{egr} \qquad \dots (2)$$

According to Embodiment 4, the excessive rotation of turbine can be prevented even in a supercharged engine having no air flowmeter.

Embodiment 5

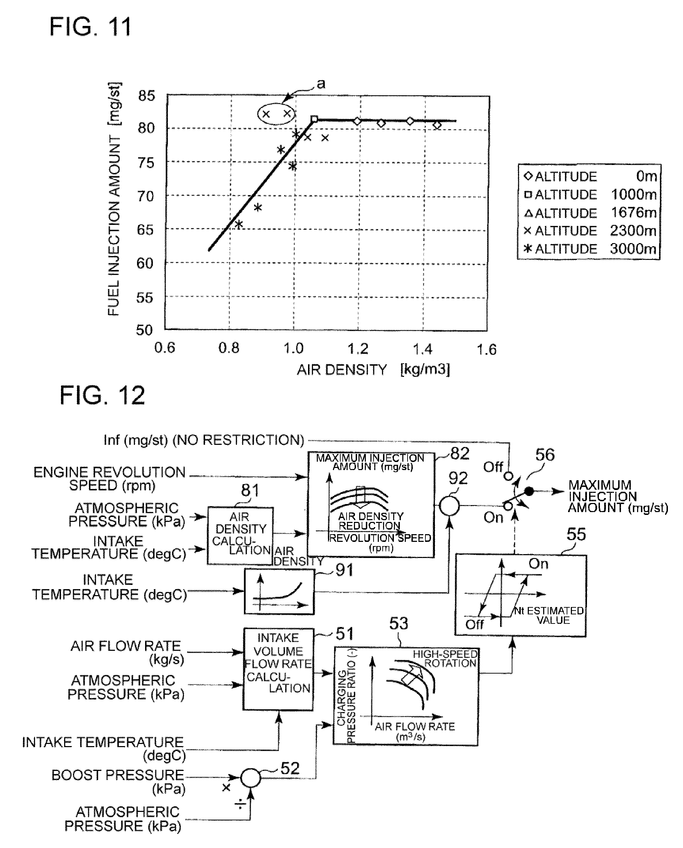

FIG. 11 is a graph illustrating the relationship between the air density at a constant engine revolution speed and the maximum fuel injection amount at which the turbine revolution speed becomes equal to or less than the allowed value. In FIG. 11, the maximum fuel injection amount (mg/st) is plotted against the ordinate, and the air density (kg/m$^3$) is plotted against the abscissa; each plot is obtained from experimental points. As shown in FIG. 11, a constant relationship exists between the maximum fuel injection amount and air density. By creating such a graph for each revolution speed, it is possible to create in advance a map representing the relationship between the maximum fuel injection amount, air density, and turbine revolution speed.

FIG. 10 illustrates the control logic of flow injection amount in Embodiment 5.
The reference numerals in FIG. 10 that are identical to those in FIG. 2 denote same operations and control and the explanation thereof is herein omitted.
In the box 81 shown in FIG. 10, the atmospheric pressure (kPa) detected by the pressure sensor 38 and the intake temperature (°C) detected by the temperature sensor 34 are inputted to the ECU 40, and the air density (kg/m$^3$) is calculated from the atmospheric pressure (kPa) and intake temperature (°C) .

In the box 82 shown in FIG. 10, the maximum injection amount is determined on the basis of the map representing the relationship between maximum fuel injection amount, air density, and turbine revolution speed that has been created in advance.

According to Embodiment 5, it is possible to create a map that can be used to determine the maximum injection amount with higher accuracy with respect to the input values, and the decrease in reduction of engine output when preventing the excessive rotation of turbine can be ensured.

Embodiment 6

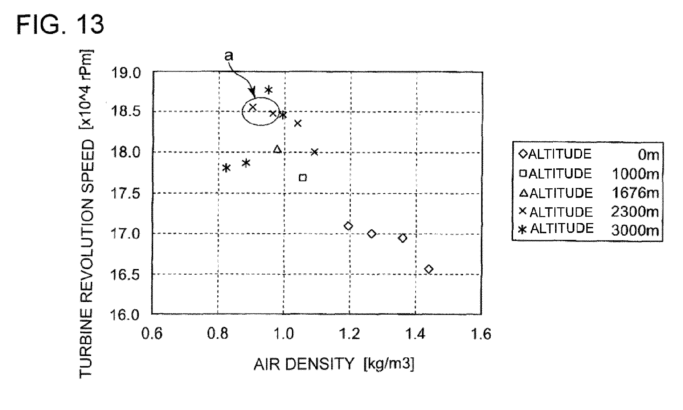

FIG. 13 is a graph illustrating the relationship between the turbine revolution speed and air density with respect to the experimental points shown in the graph in FIG. 11.
Where the maximum fuel injection amount is restricted by the map such as used in box 82 in FIG. 10 with respect to the data shown by section (a) in FIG. 11 and FIG. 13, the restriction is applied despite the fact that the turbine revolution speed is equal to or less than the allowed value. This is due to the variation in fuel consumption rate caused by the intake temperature. Accordingly, in Embodiment 6, the maximum injection amount is corrected by the fuel consumption rate that changes according to the intake temperature.

FIG. 12 is a drawing illustrating the control logic of fuel injection amount in Embodiment 6.
The reference numerals in FIG. 12 that are identical to those in FIG. 2 and FIG. 10 and denote same operations and control and the explanation thereof is herein omitted.
In the box 91 in FIG. 12, the degradation ratio of fuel consumption rate is calculated from the intake temperature, and in the box 92, the maximum injection amount determined by the map in the box 82 is corrected by the degradation ratio of fuel consumption rate. As a result, the maximum injection amount increases with the increase in the degradation ratio of fuel consumption rate.

According to Embodiment 6, by taking into account the variation in fuel consumption rate when the excessive rotation of the turbine is prevented, it is possible to decrease further the reduction in engine output.

**INDUSTRIAL APPLICABILITY**

The present invention provides a control device for a turbocharged engine. The control device is capable of accurately estimating the revolution speed of a turbine, without using additional components for directly detecting the turbine revolution speed, and of accurately keeping the turbine revolution speed at the allowed value or below and preventing excessive rotation by accurately estimating the turbine revolution speed.

**Claims**

1. A control device for a turbocharged engine, comprising:

    a turbocharger having a compressor disposed in an intake passage of an engine, and a turbine disposed in an exhaust passage of the engine; and
    a fuel injection amount control unit for controlling a fuel injection amount to the engine according to an operating state of the engine, the control device further comprising:

        a turbine revolution speed estimation unit for determining by calculations an estimated value of a revolution speed of the turbine from the operating state of the engine, wherein
        when the estimated value of the turbine revolution speed exceeds a predetermined allowed value, the fuel injection control unit controls the fuel injection amount such that the estimated value of the turbine revolution speed becomes equal to or less than the allowed value.

2. The control device for a turbocharged engine according to claim 1, comprising:

an atmospheric pressure measurement unit for measuring an atmospheric pressure;
an intake mass flow rate measurement unit for measuring an intake mass flow rate of intake air sucked into the compressor disposed in the intake passage;
an intake temperature measurement unit for measuring a temperature of the intake air introduced into the compressor disposed in the intake passage; and
a boost pressure measurement unit for measuring a boost pressure of the engine, wherein
the turbine revolution speed estimation unit determines an intake volume flow rate in a standard state of intake air sucked into the compressor disposed in the intake passage by using the atmospheric pressure, the intake mass flow rate, and the intake temperature, determines a charging pressure ratio by dividing the boost pressure by the atmospheric pressure, and estimates a turbine revolution speed by using a turbocharger performance curve representing a relationship between the intake volume flow rate in the standard state, an intake pressure ratio, and the turbine revolution speed.

3. The control device for a turbocharged engine according to claim 1, comprising:

an atmospheric pressure measurement unit for measuring an atmospheric pressure; and
an intake temperature measurement unit for measuring a temperature of the intake air introduced into the compressor disposed in the intake passage, wherein
the turbine revolution speed estimation unit:

calculates an air density of the intake air by using the atmospheric pressure and the intake temperature; and
estimates a turbine revolution speed from the air density of the intake air by using a map representing a relationship between the intake density and the turbine revolution speed that has been created in advance on the basis of an experiment.

4. The control device for a turbocharged engine according to claim 2 or 3, wherein
the intake temperature measurement unit uses an air supply manifold temperature measurement unit for measuring an air supply manifold temperature inside an air supply manifold of the engine, and a map representing a relationship between the air supply manifold temperature and the intake temperature that has been created in advance on the basis of an experiment to determine an intake temperature from the air supply manifold temperature.

5. The control device for a turbocharged engine according to any one of claims 2 to 4, wherein
the fuel injection amount control unit:

sets in advance a maximum fuel injection amount at which the turbine revolution speed becomes equal to or less than the allowed value, according to the turbine revolution speed and atmospheric pressure; and
decreases the fuel injection amount to a value equal to or less than the maximum fuel injection amount corresponding to the atmospheric pressure and turbine revolution speed and makes the turbine revolution speed equal to or less than the allowed value, when the turbine revolution speed exceeds the allowed value.

6. The control device for a turbocharged engine according to any one of claims 2 to 4, comprising
an air density calculation unit for calculating an air density of the intake air by using the atmospheric pressure and intake temperature, wherein
the fuel injection amount control unit:

sets in advance a maximum fuel injection amount at which the turbine revolution speed becomes equal to or less than the allowed value, according to the turbine revolution speed and air density; and
decreases the fuel injection amount to a value equal to or less than the maximum fuel injection amount corresponding to the air density and turbine revolution speed and makes the turbine revolution speed equal to or less than the allowed value, when the turbine revolution speed exceeds the allowed value.

7. The control device for a turbocharged engine according to claim 5 or 6, wherein
the fuel injection amount control unit:

calculates a degradation ratio of fuel consumption rate corresponding to the intake temperature; and
performs correction so as to increase the maximum fuel injection amount as the degradation ratio becomes larger.

**Amended claims under Art. 19.1 PCT**

**1.** Deleted)

**2.** A control device for an engine with a turbocharger that has a turbocharger having a compressor disposed in an intake passage of an engine, and a turbine disposed in an exhaust passage of the engine, a fuel injection amount control unit for controlling a fuel injection amount to the engine according to an operating state of the engine, and a turbine revolution speed estimation unit for determining by calculations an estimated value of a revolution speed of the turbine from the operating state of the engine, wherein when the estimated value of the turbine revolution speed exceeds a predetermined allowed value, the fuel injection control unit controls the fuel injection amount such that the estimated value of the turbine revolution speed becomes equal to or less than the allowed value, the control device comprising:

an atmospheric pressure measurement unit for measuring an atmospheric pressure;
an intake mass flow rate measurement unit for measuring an intake mass flow rate of intake air sucked into the compressor disposed in the intake passage;
an intake temperature measurement unit for measuring a temperature of the intake air introduced into the compressor disposed in the intake passage; and
a boost pressure measurement unit for measuring a boost pressure of the engine, wherein
the turbine revolution speed estimation unit determines an intake volume flow rate in a standard state of intake air sucked into the compressor disposed in the intake passage by using the atmospheric pressure, the intake mass flow rate, and the intake temperature, determines a charging pressure ratio by dividing the boost pressure by the atmospheric pressure, and estimates a turbine revolution speed by using a turbocharger performance curve representing a relationship between the intake volume flow rate in the standard state, an intake pressure ratio, and the turbine revolution speed.

**3.** A control device for an engine with a turbocharger that has a turbocharger having a compressor disposed in an intake passage of an engine, and a turbine disposed in an exhaust passage of the engine, a fuel injection amount control unit for controlling a fuel injection amount to the engine according to an operating state of the engine, and a turbine revolution speed estimation unit for determining by calculations an estimated value of a revolution speed of the turbine from the operating state of the engine, wherein when the estimated value of the turbine revolution speed exceeds a predetermined allowed value, the fuel injection control unit controls the fuel injection amount such that the estimated value of the turbine revolution speed becomes equal to or less than the allowed value, the control device comprising:

an atmospheric pressure measurement unit for measuring an atmospheric pressure; and
an intake temperature measurement unit for measuring a temperature of the intake air introduced into the compressor disposed in the intake passage, wherein
the turbine revolution speed estimation unit
calculates an air density of the intake air by using the atmospheric pressure and the intake temperature, and estimates a turbine revolution speed from the air density of the intake air by using a map representing a relationship between an intake density and a turbine revolution speed that has been created in advance on the basis of an experiment.

**4.** The control device for a turbocharged engine according to claim 2 or 3, wherein
the intake temperature measurement unit uses an air supply manifold temperature measurement unit for measuring an air supply manifold temperature inside an air supply manifold of the engine, and a map representing a relationship between the air supply manifold temperature and the intake temperature that has been created in advance on the basis of an experiment to determine an intake temperature from the air supply manifold temperature.

**5.** The control device for a turbocharged engine according to any one of claims 2 to 4, wherein
the fuel injection amount control unit:

sets in advance a maximum fuel injection amount at which the turbine revolution speed becomes equal to or less than the allowed value, according to the engine revolution speed and atmospheric pressure; and decreases the fuel injection amount to a value equal to or less than the maximum fuel injection amount corresponding to the atmospheric pressure and engine revolution speed and makes the turbine revolution speed equal to or less than the allowed value, when the turbine revolution speed exceeds the allowed value.

**6.** The control device for a turbocharged engine according to any one of claims 2 to 4, comprising
an air density calculation unit for calculating an air density of the intake air by using the atmospheric pressure and intake temperature, wherein
the fuel injection amount control unit:

sets in advance a maximum fuel injection amount at which the turbine revolution speed becomes equal to or less than the allowed value, according to the revolution speed and air density; and
decreases the fuel injection amount to a value equal to or less than the maximum fuel injection amount corresponding to the air density and engine revolution speed and makes the turbine revolution speed equal to or less than the allowed value, when the turbine revolution speed exceeds the allowed value.

**7.** The control device for a turbocharged engine according to claim 4 or 5, wherein
the fuel injection amount control unit:

calculates a degradation ratio of fuel consumption rate corresponding to the intake temperature; and
performs correction so as to increase the maximum fuel injection amount as the degradation ratio becomes larger.

**Grounds for Amendment**
Claim 1 is a combination of the original claims 1 and 2, and claim 2 is a combination of the original claims 1 and 3. The amendment of "the atmospheric pressure and engine revolution speed" in claim 5 is based on the description of the reference numeral 54 in FIG. 2 and FIG. 6, and the amendment of "the air density and engine revolution speed" in claim 6 is based on the description of the reference numerals 81 and 82 in FIG. 10.

FIG. 1

FIG. 2

Inf (mg/st) (NO RESTRICTION)

ENGINE REVOLUTION SPEED (rpm)

ATMOSPHERIC PRESSURE (kPa)

54 — MAXIMUM INJECTION AMOUNT (mg/st) / ATMOSPHERIC PRESSURE REDUCTION / REVOLUTION SPEED (rpm)

Off

On

56 → MAXIMUM INJECTION AMOUNT (mg/st)

55 — On / Off / Nt ESIMATED VALUE

AIR FLOW RATE (kg/s)

ATMOSPHERIC PRESSURE (kPa)

51 — INTAKE VOLUME FLOW RATE CALCULATION

INTAKE TEMPERATURE (degC)

INTAKE TEMPERATURE (degC)

53 — CHARGING PRESSURE RATIO (-) / HIGH-SPEED ROTATION / AIR FLOW RATE (m³ / s)

52

BOOST PRESSURE (kPa)

×

÷

ATMOSPHERIC PRESSURE (kPa)

EP 2 444 629 A1

FIG. 3

```
                    ┌─────────┐
                    │  START  │
                    └────┬────┘
                         ▼
          ┌──────────────────────────┐
          │ SENSOR DATA ARE READ      │──── S1
          └────────────┬─────────────┘
                       ▼
          ┌──────────────────────────┐
          │ INTAKE VOLUME FLOW        │──── S2
          │ RATE IS CALCULATED        │
          └────────────┬─────────────┘
                       ▼
          ┌──────────────────────────┐
          │ CHARGING PRESSURE         │──── S3
          │ RATIO IS CALCULATED       │
          └────────────┬─────────────┘
                       ▼
          ┌──────────────────────────┐
          │ TURBINE REVOLUTION        │──── S4
          │ SPEED IS ESTIMATED        │
          └────────────┬─────────────┘
                       ▼
          ┌──────────────────────────┐
          │ MAXIMUM INJECTION         │──── S5
          │ AMOUNT IS CALCULATED      │
          └────────────┬─────────────┘
                       ▼
          ┌──────────────────────────┐
          │ MAXIMUM INJECTION         │──── S6
          │ AMOUNT RESTRICTION        │
          │ IS DETERMINED             │
          └────────────┬─────────────┘
                       ▼
          ┌──────────────────────────┐
          │ MAXIMUM INJECTION         │──── S7
          │ AMOUNT IS OUTPUTTED       │
          └────────────┬─────────────┘
                       ▼
                    ┌─────────┐
                    │   END   │
                    └─────────┘
```

FIG. 4

```
                              ┌─────────┐
                              │  START  │
                              └────┬────┘
                                   ▼
                              ◇─────────◇   S11  INJECTION AMOUNT
                    NO       ◇           ◇        RESTRICTION FLAG
              ┌─────────────◇             ◇       = ON ?
              │              ◇           ◇
              │               ◇─────────◇
              │                    │ YES
              ▼                    ▼                     S12
        ◇─────────◇          ◇─────────◇
   NO  ◇           ◇    NO   ◇           ◇  NO
  ┌───◇  Nt >       ◇   ┌──◇  Nt <        ◇──┐
  │   ◇  190,000 rpm?◇  │  ◇  180,000 rpm? ◇  │
  │    ◇           ◇    │   ◇           ◇     │
  │     ◇─────────◇     │    ◇─────────◇      │
  │  S15    │ YES        │       │ YES  S13   │
  │         ▼            │       ▼            │
  │  ┌──────────────┐    │  ┌──────────────┐  │
  │  │ INJECTION    │    │  │ INJECTION    │  │
  │  │ AMOUNT       │    │  │ AMOUNT       │  │
  │  │ RESTRICTION  │    │  │ RESTRICTION  │  │
  │  │ FLAG = ON?   │    │  │ FLAG = OFF?  │  │
  │  └──────┬───────┘    │  └──────┬───────┘  │
  └─────────┴────────────┘         │          │
                                   ▼◄─────────┘
                              ┌─────────┐
                              │ RETURN  │
                              └─────────┘
```

## FIG. 5

START

S21 INJECTION AMOUNT RESTRICTION FLAG = ON ?

NO / YES

S22 IS ENGINE KEY OFF? — YES

S23: HAS PREDETERMINED TIME INTERVAL SPEED SINCE INJECTION AMOUNT RESTRICTION FLAG BECOME ON?

NO

S25 Nt > 190,000 rpm ?

NO / YES

S23 — YES / NO

S26 INJECTION AMOUNT RESTRICTION FLAG = ON

S24 INJECTION AMOUNT RESTRICTION FLAG = OFF

RETURN

## FIG. 6

Inf (mg/st) (NO RESTRICTION)

54 MAXIMAM INJECTION AMOUNT (mg/st)

ENGINE REVOLUTION SPEED (rpm) →

ATMOSPHERIC PRESSURE REDUCTION — REVOLUTION SPEED (rpm)

ATMOSPHERIC PRESSURE (kPa) →

Off / On — 56 MAXIMUM INJECTION AMOUNT (mg/st)

55 On / Off — Nt ESTIMATED VALUE

61 AIR DENSITY CALCULATION

ATMOSPHERIC PRESSURE (kPa) →

INTAKE TEMPERATURE (degC) →

AIR DENSITY

62 TURBINE REVOLUTION SPEED (rPm) — AIR DENSITY (kg / m³)

17

FIG. 7

FIG. 8

Inf (mg/st) (NO RESTRICTION) ─────────────────────────────────────────────┐

ENGINE REVOLUTION SPEED (rpm) ──────→ ┌──────────────────┐ 54 Off       56
                                       │ MAXIMUM INJECTION │    ○
                                       │ AMOUNT (mg/st)    │      ↘●──→ MAXIMUM INJECTION
                                       │                   │    ○         AMOUNT (mg/st)
ATMOSPHERIC PRESSURE (kPa) ──────────→ │ ATMOSPHERIC       │    On
                                       │ PRESSURE          │
                                       │ REDUCTION         │        ┌──────────────┐ 55
                                       │ REVOLUTION        │        │        On    │
                                       │ SPEED (rpm)       │        │      ↗       │
                                       └──────────────────┘        │    ↗  Nt ESTIMATED
                                                                   │       VALUE  │
                          51                    53                 │  Off ↗       │
                    ┌──────────────┐      ┌──────────────┐         └──────────────┘
AIR FLOW RATE (kg/s) ─→│ INTAKE      │      │ HIGH-SPEED   │
                       │ VOLUME      │─────→│ ROTATION     │
                       │ FLOW RATE   │      │ CHARGING     │
ATMOSPHERIC PRESSURE   │ CALCULATION │      │ PRESSURE     │
(kPa) ────────────────→│             │      │ RATIO (-)    │
                       └──────────────┘      │              │
                    73      INTAKE           │ AIR FLOW RATE│
                            PRESSURE ↑       │ (m³ / s)     │
                            (degC)           └──────────────┘
INTAKE TEMPERATURE (degC) ──────────○
                                     ↘●
              71        72          ○ ↑
           ┌─────┐  ┌──────────┐
AIR SUPPLY │ LPF │─→│    ╱     │
MANIFOLD   └─────┘  │   ╱      │
TEMPERATURE (degC)  └──────────┘

SYSTEM CONFIGURATION FLAG ─────────────────────

                        52
BOOST PRESSURE (kPa) ──────→ ⊗
                          ×  ○
                          ÷  ↑
ATMOSPHERIC PRESSURE (kPa) ─┘

## FIG. 9

## FIG. 10

FIG. 11

FIG. 12

FIG. 13

## INTERNATIONAL SEARCH REPORT

| | International application No. |
|---|---|
| | PCT/JP2010/059941 |

A. CLASSIFICATION OF SUBJECT MATTER
*F02B39/16*(2006.01)i, *F02D41/04*(2006.01)i

According to International Patent Classification (IPC) or to both national classification and IPC

B. FIELDS SEARCHED

Minimum documentation searched (classification system followed by classification symbols)
F02B39/16, F02D41/04

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2009-180162 A (Nissan Motor Co., Ltd.),<br>13 August 2009 (13.08.2009),<br>claim 4<br>(Family: none) | 1-6<br>7 |
| Y | JP 2003-307151 A (Komatsu Ltd.),<br>31 October 2003 (31.10.2003),<br>paragraph [0019]<br>(Family: none) | 1-6 |
| Y | JP 2009-191660 A (Toyota Motor Corp.),<br>27 August 2009 (27.08.2009),<br>paragraph [0023]<br>(Family: none) | 4 |

☐ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 05 August, 2010 (05.08.10) | 17 August, 2010 (17.08.10) |

| Name and mailing address of the ISA/<br>Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005299618 A
- JP 2008184922 A